# EUROPEAN PATENT APPLICATION

(11) **EP 4 707 730 A1**
(43) Date of publication of application: **11.03.2026**
(21) Application number: 25199413.3
(22) Date of filing: 01.09.2025
(51) Int. Cl.: G01B 11/275, G01B 11/24

(54) **SERVICE-VEHICLE SYSTEM**

(30) Priority: 06.09.2024 IT 202400019924
(71) Applicant: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(57) **Abstract**

Vehicle service system (1) for controlling a vehicle (100) located in a vehicle service area (2) that comprises a movable plane (PK) movable along a first sliding direction (s1) transverse to the ground (F) between a lowered position and a raised position,
the vehicle service system comprises at least two optical reader apparatuses (8), which are located in the vehicle service area (100), on opposite sides relative to a first longitudinal axis (A) of said vehicle (100),
the optical reader apparatus (4) comprises an oblong housing (16) extending along an axis (B), a target (12), an optical image acquisition assembly (9) configured to capture images of the vehicle (100) and of the target (12), and a support slide (23), which is carried by the oblong housing (16) in a sliding manner, supports the optical image acquisition assembly (9) along the oblong housing (16) between a lowered position and a raised position.

## Description

### CROSS-REFERENCE TO RELATED APPLICATIONS

This patent application claims priority from Italian patent application no. 102024000019924 filed on September 6, 2024, the entire disclosure of which is incorporated herein by reference.

### TECHNICAL FIELD

The invention relates to a vehicle service system.

More in detail, the invention relates to a vehicle service system for the measurement of parts of the vehicle, for the measurement of the alignment parameters of the wheels of the vehicle and/or for the calibration of the sensors of an ADAS system of the vehicle.

### PRIOR ART

Vehicle service systems are known, which are provided with a service area configured to accommodate the vehicle to be measured and with optical scanning apparatuses generally placed on opposite sides of the vehicle and configured to acquire images of the sides of the vehicle in order to determine the position of the vehicle in the service area relative to a predetermined reference system and/or measure characteristic parameters of the vehicle, such as, for example, the alignment parameters (camber and toe angle and angle of attack) of the wheels of the vehicle.

A known vehicle service system is described, for example, in the Applicant's European patent EP4012328 B1. This system essentially involves the use of a series of optical reader apparatuses that are arranged so as to face the sides of the vehicle to capture images thereof.

Each optical reader apparatus comprises an oblong casing resting on the ground, which projects upwards and supports a binocular stereoscopic vision system generally provided with two cameras equipped with a field of view that frames the side of the vehicle, so as to determine both the position of the vehicle in the predetermined reference system and the values of the aforementioned characteristic parameters.

However, during traditional vehicle maintenance and wheel alignment correction operations, car lifts are usually used to lift the vehicle off the ground and bring the wheels approximately to the height of the operator's face.

The optical readers described above have a limited field of view and are not capable of accurately determining the alignment of the wheels of the vehicle once lifted by the car lift.

This unfortunately does not allow the operator to verify in real time the correctness of the manual corrections carried out on the alignment of the wheels and often forces him/her to lift and lower the car lift several times in order to first manually intervene on the suspension or on the steering system of the vehicle to adjust the alignment of the wheels and then verify the correctness of the adjustments carried out, with the obvious drawbacks that this entails.

Therefore, operators need to have three-dimensional optical readers that are able to accurately scan the sides of a vehicle both when it rests on the ground and when it is lifted by the car lift.

### DESCRIPTION OF THE INVENTION

The object of the invention is to provide a vehicle service system and a relative operating method, which overcome the technical problems discussed above and meet the aforesaid needs.

In accordance with this object, according to the invention, there are provided a vehicle service system and an operating method for the operation thereof, as defined in the relative independent claims and preferably, though not necessarily, in any one of the claims depending on them. The appended claims describe preferred embodiments of the invention and form an integral part of the description.

### BRIEF DESCRIPTION OF THE DRAWINGS

The invention will now be described with reference to the accompanying drawings showing a non-limiting embodiment thereof, wherein:
- Figures 1 and 2 are two perspective views of a vehicle service system according to the invention, in as many operating positions and with parts removed for greater clarity;
- Figure 3 is a top view of the vehicle service system shown in Figures 1 and 2, with parts removed for greater clarity;
- Figures 4 and 5 are two perspective views of an optical image reader apparatus of the vehicle service system shown in Figures 1-3, with parts removed for greater clarity, and
- Figure 6 is a view from the bottom of the optical image reader apparatus shown in Figures 4 and 5, with parts removed for greater clarity.

### PREFERRED EMBODIMENTS OF THE INVENTION

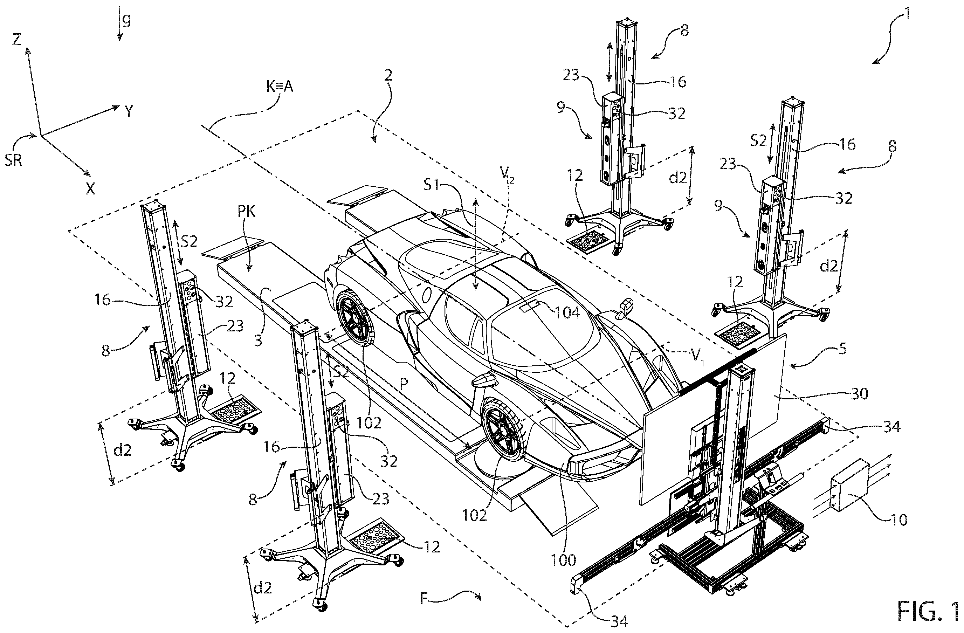

With reference to Figures 1, 2 and 3, number 1 indicates, as a whole, a vehicle service system advantageously configured to measure/check a vehicle 100 and/or parts/components of the vehicle 100. The system 1 can comprise an optical scanning system.

The system 1 can be configured to measure/control characteristic parameters of the vehicle 100 such as, for example, the alignment parameters of its wheels 102 and/or to calibrate/align the sensors of an advanced driver assistance system or ADAS (acronym of Advanced Driver Assistance System) of the vehicle 100.

In the example shown in Figures 1, 2 and 3, the vehicle 100 is standing in a control station or service area 2, which comprises a plane/ground F, on which, in use, the wheels 102 of the vehicle 100 rest.

The plane F can comprise, for example, a horizontal support surface such as the floor of a workshop or the like.

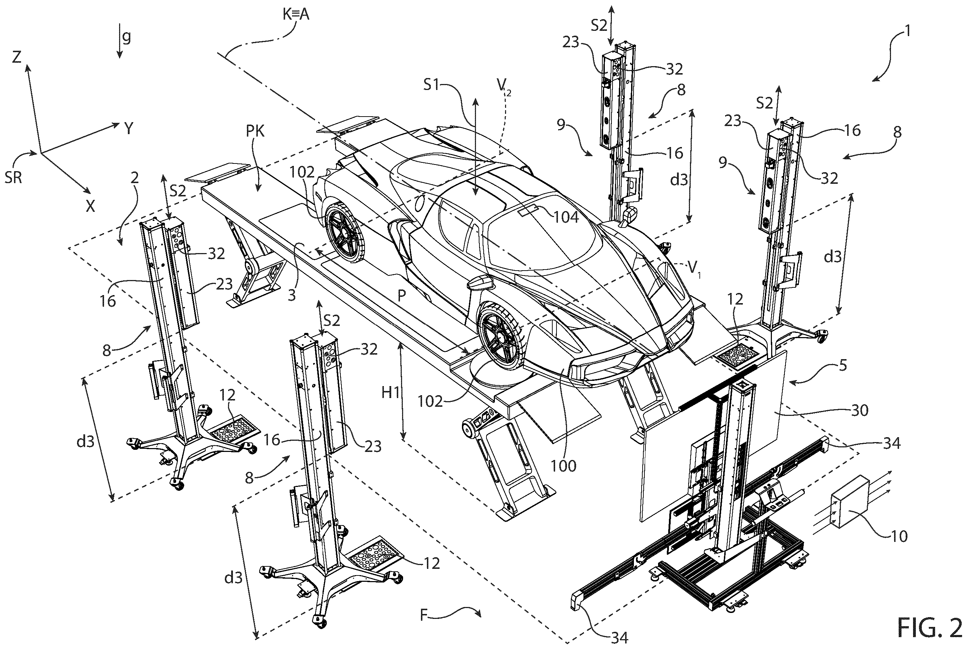

More in detail, the control station 2 preferably comprises a movable plane PK, which is rests on the plane F, supports the vehicle 100 and extends along an axis K. The plane PK is configured to be moved, on command, between a rest/lowered position (shown in Figure 1), in which it is approximately coplanar to the plane F, and a operative/raised position (shown in Figure 2), in which the plane PK is lifted relative to the plane F at a height H1.

Preferably, the plane PK is movable between the operative position and the rest position along a direction s1, which is orthogonal to the plane F, namely vertical.

The movable plane PK can comprise, for example, a movable platform of a lift 3 for vehicles 100 resting on the plane F. The lift 3 shown herein is known and will not be further described.

In the example shown in Figures 1, 2 and 3, the vehicle 100 preferably is a car and centrally has a longitudinal reference axis A and is provided with four wheels 102 arranged in pairs on opposite sides of the axis A and coupled to two corresponding axles, namely, a front axle V1 and a rear axle V2, which are orthogonal to the axis A and are spaced apart from one another by a wheelbase distance p.

In the description below, the term wheel 102 indicates a general wheel of a car comprising at least a rim and a tyre. Furthermore, the invention is not limited to a car, but can be applied to any type of motor vehicle provided with any number of wheels and axles Vi (wherein i is variable =>2), for example a truck or a lorry or a bus, having two or more axles and four or more wheels 102.

The system 1 is configured to determine a series of geometric parameters characterizing the vehicle 100 and/or parts/components thereof.

According to a preferred embodiment of the invention, the geometric parameters of the parts/components of the vehicle can, for example, relate to: the wheels 102 and/or the axles V1, V2 and/or the steering system (which is not shown herein). The geometric parameters of the wheels 102 can comprise the alignment parameters of the wheels 102, for example: the angle or plane of attack of the wheel, the camber angle of the wheel, the toe angle or plane of the wheel. The angles or planes can preferably be determined relative to at least one predetermined three-dimensional reference system SR. The geometric parameters characterizing the wheels 102 used by the vehicle service system 1 for the control, for example, of the wheel alignment of the vehicle 100 are known and, therefore, will not be discussed any further.

The reference system SR comprises three Cartesian axes x, y, z orthogonal to one another. The reference system SR is oriented so that the axis z is vertical, namely aligned with the gravity vector g.

Preferably, the movable plane PK is orthogonal to the axis z of the reference system SR. In addition, the sliding direction s1 of the movable plane PK preferably is parallel to the axis z of the reference system SR.

Obviously, the vehicle service system 1 is not limited to the determination of the above-mentioned geometric parameters for the control of the wheel alignment of the vehicle 100, but, in addition and/or alternatively, it can involve the determination of other pieces of information concerning the vehicle 100. These pieces of information can comprise, for instance, the position of the vehicle 100 within the vehicle control station 100 relative to the reference system SR. More in detail, the system 1 can be able to determine the position of the vehicle 100 relative to the predetermined reference system SR based on the images of the axles V1 and/or V2 and/or of the wheels 102. The vehicle service system 1 can be configured to communicate (for example, through wireless communication) data/signals indicative of the position of the vehicle 100 relative to a predetermined reference system SR to one or more vehicle analysis/diagnosis systems (which are not shown herein). Conveniently, the system 1 can comprise an ADAS control and/or calibration apparatus 5, described in more detail below, configured to calibrate electronic sensor devices, hereinafter referred to as ADAS sensors 104, comprised in an advanced driver assistance system or ADAS of the vehicle 100.

The ADAS sensor 104 can comprise any sensor of the advanced driver assistance system 100. For example, the ADAS sensor 104 can comprise: a radar sensor, an optical sensor, a camera, a LIDAR sensor, an ultrasound sensor, an infrared (IR) sensor or any other similar sensor. The ADAS calibration apparatus 5 is preferably arranged in the control station 2 advantageously in front of the vehicle 100, aligned along the axis A. In addition, the ADAS calibration apparatus 5 can receive the data/signals indicative of the position of the vehicle 100 in the predetermined reference system SR and determine its position relative to the vehicle 100 based on its own position relative to the predetermined reference system SR of the vehicle service system 1 and on the position of the vehicle 100 relative to the reference system SR.

With reference to the example shown in Figures 1 to 6, the system 1 comprises optical image reader apparatuses 8. The system 1 comprises at least two optical image reader apparatuses 8, which are arranged opposite one another on opposite sides of the vehicle 100, on the periphery thereof, on opposite sides of the axis A. More in detail, the system 1 preferably comprises a plurality of optical image reader apparatuses 8, which are arranged in pairs on opposite sides of the vehicle 100 and on the axis A, facing a respective pair of wheels 102.

In the example shown herein, the optical image reader apparatuses 8 are preferably arranged on the plane F.

The optical image reader apparatuses 8 are arranged so as to face the two corresponding sides (lateral flanks) of the vehicle 100, which are parallel to and opposite the axis A. In the example shown herein, the optical image reader apparatuses 8 are arranged so as to face the two sides of the vehicle 100, each approximately in the area of a wheel 102 of the vehicle 100. However, the optical image reader apparatuses 8 could face the two sides of the vehicle 100, each approximately in the area of the centre of gravity of the vehicle 100.

The optical image reader apparatuses 8 are provided with an optical image acquisition assembly 9 (described in detail below), which is configured to provide respective data/signals encoding one or more images entirely - or at least partially - representing the opposite sides of the vehicle 100 relative to the axis A.

The vehicle service system 1 further comprises a processing and control system 10, which is operatively connected to the optical image reader apparatuses 8 and is configured to process the data/signals provided by the optical image acquisition devices 9 in order to determine/build 3D (three-dimensional) images of the vehicle 100 and/or of parts thereof, by means of artificial vision algorithms, based on said data/signals. The aforesaid artificial vision algorithms are known and, as a consequence, will not be described any further.

Furthermore, the optical image reader apparatuses 8 each comprise a target 12 (or calibration target), which lies on the plane K and is placed at a predetermined distance D1 from the relative optical image reader apparatus 4. The distance D1 advantageously is less than 10 centimetres, more conveniently less than 5 centimetres.

In other words, the target 12 is arranged on the plane F, immediately adjacent to the relative optical image acquisition device 9, so that it can be viewed by the relative optical image acquisition assembly 9.

In addition, the target 12 is preferably arranged on the plane F in a known position relative to the reference system SR.

The target 12 can conveniently be arranged between the optical image acquisition assembly 9 and the side of the vehicle 100 facing the optical image acquisition assembly 9. Obviously, according to the invention, the target 12 can be placed in any superficial position of the plane F that surrounds the image acquisition assembly 9 and is immediately adjacent thereto so that it can be viewed by the optical image acquisition assembly 9.

The electronic processing and control system 10 is configured to calibrate the optical image reader apparatuses 8 based on the images of the respective targets 12.

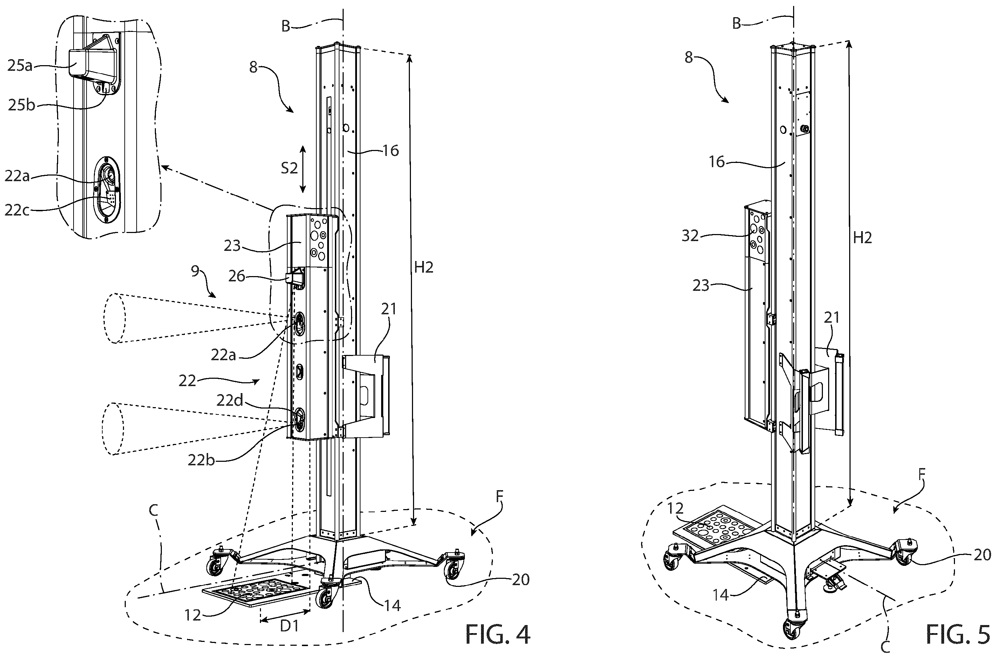

With reference to Figures 4, 5 and 6, in particular, each optical image reader apparatus 8 further comprises a plate-shaped element 14, which has a longitudinal axis C. The plate-shaped element 14 is arranged on the plane F and has, on its upper surface, the target 12. Obviously, the plate-shaped element 14 is arranged on a superficial portion of the plane F, on the periphery of the vehicle 100.

The optical image reader apparatus 8 further comprises an oblong housing or support column 16, which extends along a longitudinal axis B and is configured to be fixed/anchored to the ground, in a position adjacent to the target 12.

More in detail, the oblong housing 16 can preferably be selectively coupled to the plate-shaped element 14 in a position immediately adjacent to the target 12.

In use, the longitudinal axis B advantageously is orthogonal to the plane F, namely it is vertical. In particular, the longitudinal axis B preferably is parallel to the Cartesian axis z of the reference system SR.

In other words, the oblong housing 16 can be coupled to the plate-shaped element 14 so that its longitudinal axis B is approximately orthogonal to the plate-shaped element 14 and to its axis C.

The oblong housing 16 is configured to support at least one optical image acquisition assembly 9.

With reference to the example shown herein, the oblong housing 16 extends along the longitudinal axis B for a predetermined height H2, advantageously greater than 1.5 metres.

More in detail, the oblong housing 16 has a height H2 along the longitudinal axis B preferably ranging from about 2 to about 2.5 metres.

The optical image acquisition assembly 9 is carried by the oblong housing 16 so as to be able to frame and capture images of at least a portion of the vehicle 100 temporarily standing in the service area 100 and of the target 12 present on the underlying plate-shaped element 14.

According to a preferred embodiment shown in Figures 4, 5 and 6, the upper surface of the plate-shaped element 14 is approximately flat and houses the target 12.

The plate-shaped element 14 further has a lower surface opposite the upper surface, which can be approximately flat. In the example shown in Figures 4, 5 and 6, said lower surface rests on the plane F and is firmly fixed/anchored to the latter.

According to a preferred embodiment, the plate-shaped element 14 can comprise, for example, a flat plate or bracket made of a rigid material.

In the example shown herein, the plate-shaped element 14 has an approximately rectangular shape and has, at a first axial end, the target 12. The target 12 is approximately planar, can comprise a two-dimensional (quadrangular) image representing a predetermined (calibration) pattern and is firmly fixed on the upper surface of the plate-shaped element 14 at its first axial end opposite the portion to which the oblong housing 16 can be coupled.

According to a preferred embodiment shown in particular in Figures 4, 5 and 6, the oblong housing 16 can comprise a tubular section bar. Preferably, the oblong housing 16 can have a polygonal section crosswise to the axis B. In the example shown herein, the oblong housing 16 has a rectangular or square cross section and has four rectangular vertical faces parallel to the axis B.

The oblong housing 16 can have, at its lower end, a base shaped so as to be able to be coupled to the plate-shaped element 14 by means of a form-fit connection.

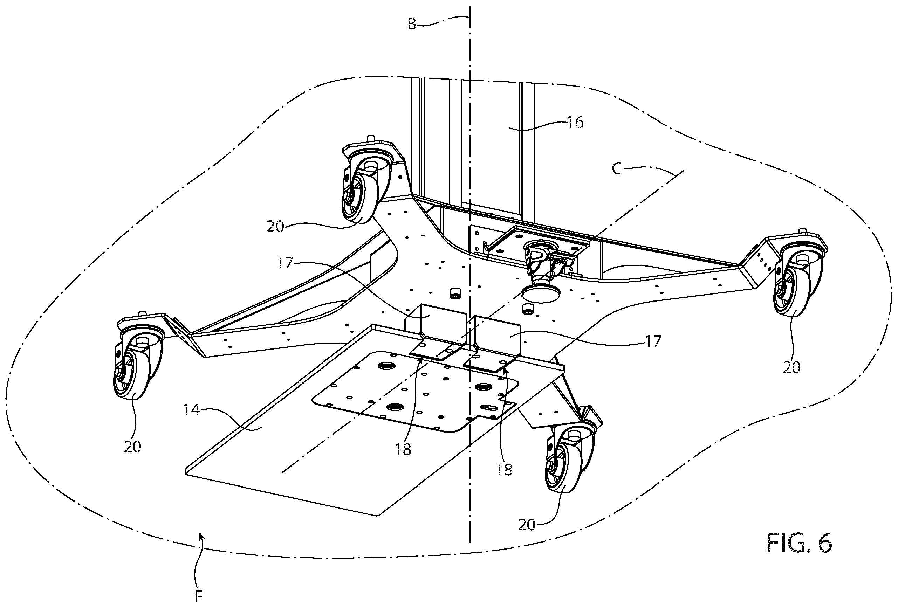

In the example shown in Figure 6, in particular, the oblong housing 16 is preferably provided with one or more protruding appendages or abutments 17, which are configured to engage as many grooves or seats 18 with a complementary shape obtained on the plate-shaped element 14.

Advantageously, the protruding appendages 17 project from the lower end of the oblong housing 16, along the longitudinal axis B towards the underlying plane F.

The grooves 18, on the other hand, are preferably obtained in the area of an axial edge of the plate-shaped element 14 opposite the target 12.

The protruding appendages 17 and the corresponding grooves 18 with a complementary shape contribute to forming a self-centring mechanism configured to facilitate the positioning of the oblong housing 16 in the area of the relative plate-shaped element 14.

In use, the oblong housing 16 can be placed approximately on the second end of the plate-shaped element 14 opposite the first end accommodating the target 12, at the distance D1 from the latter, so that the oblong housing 16 does not cover the target 12 and the optical image acquisition assembly 9 is able to view the target 12.

In addition, the oblong housing 16 is preferably provided with one or more ground support wheels 20 configured to facilitate the movement of the oblong housing 16 on the plane F.

According to a possible embodiment, the optical image reader apparatus 4 can further conveniently comprise a connection device, which is structured to anchor, in a stable yet easily separable and/or removable manner, the oblong housing 16 to the plane F, preferably to the plate-shaped element 14.

Possible embodiments of the connection device, which are not described in detail herein for the sake of brevity, can comprise magnetic coupling members, bayonet coupling members, snap coupling members, threaded coupling members and/or a combination thereof.

In addition, with reference to Figures 4 and 5, the optical image reader apparatus 8 preferably comprises one or more handles 21 or other similar gripping appendages, which are carried by the oblong housing 16 and are configured to be gripped by a user to manually move the apparatus 8.

According to the preferred embodiment of the invention shown in the accompanying Figures, the optical image reader apparatus 4 is further provided with a movable support slide 23, which is carried by the oblong housing 16 in a sliding manner, so as to be able to slide along the oblong housing 16 along a sliding direction s2 parallel to the longitudinal axis B, and is configured to support the optical image acquisition assembly 9.

More in detail, the support slide 23 is movable between a first position (shown in Figures 1, 4 and 5) and a second position (shown in Figure 2).

In the first position, the support slide 23 is arranged at a distance d2 from the plane F and in the second position the support slide 23 is arranged at a distance d3 from the plane F**.** The distance d3 is greater than the distance d2.

More in detail, in the first position, the support slide 23 is configured to place the optical image acquisition assembly 9 approximately in front of the wheels 102 of the vehicle 100, when the latter rests on the plane PK in the rest or lowered position.

In the second position, on the other hand, the support slide 23 is configured to place the optical image acquisition assembly 9 approximately in front of the wheels 102 of the vehicle 100, when the latter rests on the plane PK in the work or raised position.

The support slide 23, in particular, is preferably coupled to a side of the oblong housing 16 in a sliding manner. In particular, the support slide 23 is preferably mounted with its side on the side of the oblong casing.

More in detail, the support slide 23 is preferably coupled, in a sliding manner, to the side of the oblong housing 16 located above the plate-shaped element 14, so that the optical image acquisition assembly 9 is arranged above the target 12.

Preferably, the support slide 23 is preferably coupled, in a sliding manner, to the side of the oblong housing 16 facing the vehicle 100, so that the optical image acquisition assembly 9 also face the vehicle 100 temporarily standing in the service area 100.

In addition, the optical image reader apparatus 8 preferably comprises an actuation mechanism (not visible in the figures) configured to move the support slide 23 between the first position and the second position.

Preferably, the actuation mechanism comprises an electrically powered mechanism. Preferably, the actuation mechanism is housed inside the oblong housing 16. More in detail, the actuation mechanism preferably comprises an electrically operated actuator configured to move the support slide 23 between the first position and the second position. Preferably, said electrically operated actuator comprises an electric motor mechanically coupled to a recirculating ball screw. Obviously, the actuation mechanism could also be a manually operated actuation mechanism.

The electronic processing and control system 10 is preferably configured to control the movement of the movable plane PK and of the support slide 23 so that, when the movable plane PK is arranged in the lowered position, the support slide 23 is brought to the first position and, when the movable plane PK is arranged in the raised position, the support slide 23 is brought to the second position, preferably automatically.

For example, the electronic processing and control system 10 can comprise a user interface configured to allow a user to control the lowering or lifting of the moving plane PK and the same electronic processing and control system 10 could be configured to automatically control the position of the support slide 23 based on the position of the movable plane PK**.**

With reference to the preferred embodiment of the invention, the optical image acquisition assembly 9 preferably comprises at least one first optical image acquisition device 22 configured to provide first data/signals encoding at least one side image of the vehicle 100.

Preferably, the first optical image acquisition device 22 is configured to acquire images of the vehicle 100 and not to acquire images of the target 12.

In other words, the first optical image acquisition device 22 is preferably configured so that its field of view includes the vehicle 100 temporarily housed in the service area 2 and does not include the target 12.

The target 12 is preferably positioned so as not to fall within the field of view of the first optical image acquisition device 22.

According to the preferred embodiment of the invention, the first optical image acquisition device 22 preferably comprises at least one camera 22a. In the example shown herein, the first optical image acquisition device 22 preferably further comprises a camera 22b, which is arranged at a predetermined distance from the camera 22a. The cameras 22a and 22b cooperate with the processing and control system 10 so as to implement a binocular stereoscopic vision method. The operation of the binocular stereoscopic vision method by means of two cameras in order to build a 3D image is known and will not be described any further.

According to a preferred embodiment shown in Figures 4 and 5, the camera 22a and the camera 22b are firmly arranged in the support slide 23 so that the relative optical assemblies (lenses) face and are oriented on a common face/side of the support slide 23 so as to frame a side of the vehicle 100.

Preferably, the cameras 22a and 22b can frame the side of the vehicle 100 through openings made in the face/side of the support slide 23. The cameras 22a and 22b are arranged in the support slide 23 so as to be axially spaced apart from one another along the longitudinal axis B at said predetermined distance.

Preferably, the first optical image acquisition device 22 can further comprise at least one light source 22c or 22d configured to emit a light beam to irradiate the vehicle 100, for example the wheel 102 thereof.

Preferably, the light source 22c or 22d comprises an infrared lighter or a structured laser light source. This improves the three-dimensional detection of the wheel 102 by the respective camera 22a or 22b.

More in detail, the first optical image acquisition device 22 preferably comprises a light source 22c or 22d, each coupled to a respective camera 22a and 22b.

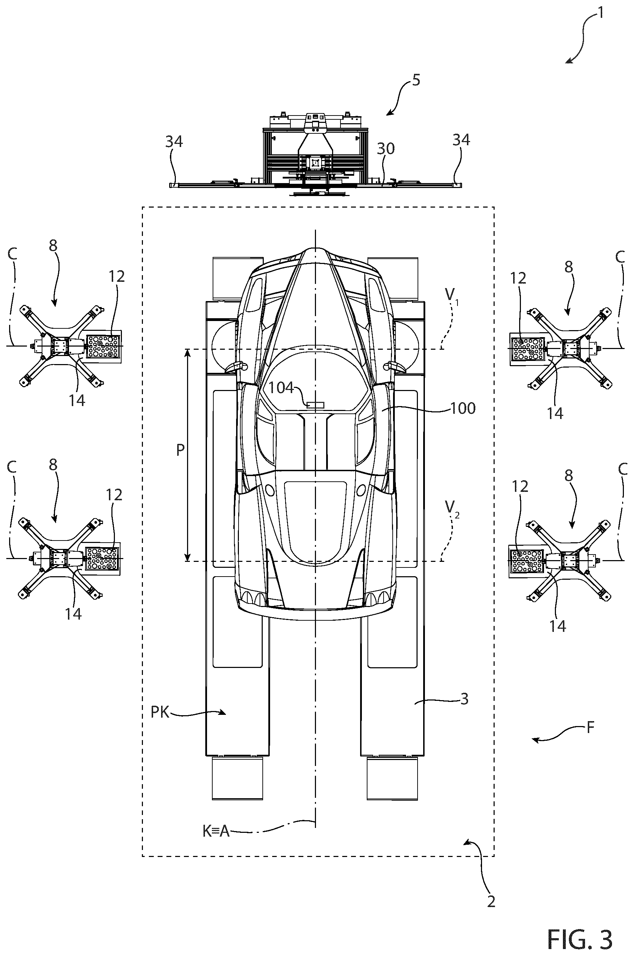

According to the preferred embodiment shown in Figures 3 and 4, the camera 22a is carried by the support slide 23 in a lower intermediate position, whereas the camera 22b is carried by the support slide 23 in an upper intermediate position.

Preferably, the cameras 22a and 22b are configured to frame the side of the vehicle 100 temporarily housed in the service area 2 and not to frame the target 12.

According to the preferred embodiment of the invention, the optical image acquisition assembly 9 preferably comprises a second optical image acquisition device 25, separate and distinct from the first optical image acquisition device 22, which is configured to capture images of the target 12 so as to provide second data/signals encoding at least the image of the target 12.

Preferably, the second optical image acquisition device 25 is configured to acquire images of the target 12 and not to acquire images of the vehicle 100, namely to only acquire images of the target 12.

In other words, the second optical image acquisition device 25 is preferably configured so that its field of view includes the target 12 and does not include the vehicle 100 temporarily housed in the service area 2.

The target 12 is preferably positioned so as to fall within the field of view of the second optical image acquisition device 25.

With reference to the example shown herein, the second optical image acquisition device 25 projects from the support slide 23 and is preferably positioned so that its optical axis is substantially vertical, namely approximately parallel to the longitudinal axis B.

In other words, the second optical image acquisition device 25 is preferably fixed on the support slide 23 in a projecting manner by means of a bracket 26, so as to be arranged above the target 12, namely advantageously vertically aligned above the target 12.

In addition, the second optical image acquisition device 25 is preferably carried by the support slide 23 above the first optical image acquisition device 22.

The second optical image acquisition device 25 is positioned so as to be able to acquire images of the target 12 both when the support slide 23 is in the first position and when the latter is in the second position or in any intermediate position between the first and the second position.

In other words, the field of view of the second optical image acquisition device 25 comprises the target 12 both when the support slide 23 is in the first position and when the latter is in the second position or in any intermediate position between the first and the second position. Obviously, the second optical image acquisition device 25 could be arranged below the first optical image acquisition device 22 and/or it could be interposed between the two cameras 22a and 22b of the first optical image acquisition device 22.

The processing and control system 10 is preferably configured to process the second data provided by the second optical image acquisition device 25 so as to determine the position of the apparatus 8 in the reference system SR.

In addition, the first 22 and the second optical image acquisition device 25 are rigidly coupled to one another, for example by a rigid plate/beam (not visible) made of a metal material or of another material with a low coefficient of thermal expansion, so that the mutual position between the first 22 and the second optical image acquisition device 25 is stable over time and does not suffer distortions due to thermal excursions, assembly tolerances or other sources of interference.

According to the preferred embodiment of the invention, the second optical image acquisition device 25 preferably comprises at least one camera 25a.

According to a preferred embodiment shown in Figures 4 and 5, the camera 25a is fixed on the support slide 23 in a projecting manner, so as to have the relative optical assembly (lens) facing and oriented towards the underlying target 12.

In addition, the second optical image acquisition device 25 can further comprise at least one light source 25b, which is configured to emit a light beam to irradiate the target 12.

Preferably, the light source 25b comprises an infrared lighter or a structured laser light source. This improves the three-dimensional detection of the target 12 by the respective camera 25a.

Moving now to the ADAS control and/or calibration apparatus 5, it is configured to rest on the plane F and to face the vehicle 100, for example aligned in front of the vehicle 100 along the axis A.

The ADAS control and/or calibration apparatus 5 preferably comprises one or more calibration devices 30, which are configured to be detected by the relative ADAS sensors 104 of the vehicle 100 during their calibration process. The calibration device 30 may comprise a calibration target, which is configured to be detected by the relative ADAS sensors 104 of the vehicle 100 during their calibration process, such as, for example, a monitor, a board or a sign with a predefined graphic pattern.

In addition, the ADAS control and/or calibration apparatus 5 comprises a support structure 31, which is configured to carry the calibration device 30 in a movable manner and to adjust the position of the calibration device 30 relative to the vehicle 100.

The support structure 31 can comprise a plurality of support elements connected to one another in a movable manner and a plurality of actuators configured to move, on command, said support elements so as to control the position of the calibration device 100 relative to the vehicle 100.

Obviously, the support structure 31 could be manually moved by a user to adjust the position of the calibration device 30 relative to the vehicle 100.

According to a possible embodiment of the invention, the optical image reader apparatuses 8 are preferably provided with a positioning target 32.

Preferably, the positioning target 32 is positioned on the support slide 23 so as to face the ADAS control and/or calibration apparatus 5.

More in detail, the positioning target 32 is preferably carried by the side of the support slide 23, which, in use, faces the ADAS control and/or calibration apparatus 5. According to the invention, the system 1 preferably comprises two video cameras 34 (or cameras or the like), which are mounted on the calibration apparatus 2 so as to be arranged in lateral positions on opposite sides relative to the calibration device/s 6 and are configured to acquire images containing the positioning targets 32 present on the respective optical apparatuses 8 and to provide third data/signals encoding one or more images representing the positioning targets 32.

Preferably, the electronic processing and control system 10 is configured to process the third data provided by the cameras 34 so as to determine the position of the ADAS control and/or calibration apparatus 5 relative to the optical image reader apparatuses 8 and/or relative to the reference system SR.

In addition, the electronic processing and control system 10 is preferably configured to control the positioning of the calibration device 30, for example by controlling said actuators or by providing instructions to a user to manually move the entire ADAS control and/or calibration apparatus 5 or the calibration device 30 through the support structure 31, so as to place the calibration device 30 in a predetermined calibration position relative to the vehicle 100.

The operating method of the vehicle service system 1 described above is as follows.

The method preferably comprises a method for adjusting/calibrating the optical image reader apparatuses 8 and a method for measuring and/or controlling the vehicle 100 and/or the parts/components of the vehicle 100.

The adjustment method preferably entails the step of determining the position of each optical image reader apparatus 8 relative to the other optical image reader apparatuses 8 in the predetermined reference system SR, in known manner, which, therefore, is not described any further.

According to the invention, during the adjustment step, the second optical image acquisition device 25 of each optical image reader apparatus 8 further captures the image of the target 12 present on the underlying plate-shaped element 14.

The processing and control system 10 processes the image of the target 12 and determines, by means of an image processing algorithm, the position and the angular orientation of the optical image acquisition assembly 9 relative to the target 12. The angular orientation of the optical image acquisition assembly 9 can be indicative, for example, of the angular orientation of the optical axes of the cameras 22a, 22b and 25a relative to the target 12.

The processing and control system 10 determines, based on the position and on the angular orientation of the optical image acquisition assembly 9, an initial position (zero position) and an initial angular orientation (zero orientation) of the apparatus 8 relative to the relative target 12 (self-zero condition) in the reference system SR. It should be pointed out that each target 12 is a fixed reference useful to determine, following the adjustment, the change in the position and/or the change in the angular orientation of the relative apparatus 4 with a high degree of precision.

The processing and control system 10 can store the geometric data obtained during the adjustment. The data can comprise: the space positions and the angular orientations of the optical image reader apparatuses 8 (relative to one another) in the three-dimensional reference system SR, the space positions and the angular orientations of each optical image reader apparatus 8 relative to the respective target 12 in the three-dimensional reference system SR.

Following the initial adjustment, the scanning system 1 is capable of implementing the method for measuring and/or controlling the vehicle 100 and/or the parts/components of the vehicle 100. According to said method, the processing and control system 10 processes the data/signals provided by the image reader apparatuses 8 in order to determine the three-dimensional images of the sides of the vehicle 100.

According to a preferred embodiment of the method, the processing system 5 processes the data/signals received from the image reader apparatuses 8, in particular from the first image acquisition device 22, through image processing algorithms in order to determine the geometric parameters characterizing the wheels 102 of the vehicle 100. According to the method, for example, the processing and control system 10 determines the values of the alignment parameters of the wheels 102 relative to the predetermined reference system SR.

Conveniently, the method entails the implementation of the method for calibrating the optical image reader apparatuses 8 relative to the relative targets 12.

Preferably, according to the calibration method, the two optical image reader apparatuses 8 capture the image of the two targets 12 present on the corresponding plate-shaped elements 14.

Preferably, according to the calibration method, for each reader apparatus 8, the processing system 5 processes the image of the relative target 12 captured by the camera 25a and determines the position and the orientation of the corresponding optical image acquisition device 25 relative to the corresponding target 12.

Preferably, according to the calibration method, the processing and control system 10 determines, for each optical reader apparatus 8, the variation between the position and the orientation measured during the calibration method and the zero position as well as the zero orientation measured during the initial adjustment.

According to the calibration method, the processing and control system 10 stores, for each optical reader apparatus 8, the determined position and orientation variation.

The calibration method entails calibrating each optical reader apparatus 8 (distance and angular orientation) based on the detected distance and orientation variations.

During the following implementation of the method for measuring and/or controlling the vehicle 100 and/or the parts/components of the vehicle 100, the processing system 1 can, for example, introduce offsets in the images and/or in the measures and/or in the geometric parameters based on the distance and angular orientation differences determined for the optical image reader.

During the implementation of the method for measuring and/or controlling the vehicle 100, and in particular during the steps of manual adjustment of the suspension or steering system of the vehicle 100 to adjust the geometric parameters of the wheels 102 (wheel alignment), the vehicle 100 can temporarily rest on the plane PK and the latter can be brought to the operative position or raised position, so as to bring the wheels 102 of the vehicle 100 approximately at the height of the user's face.

At the same time, the method involves bringing the support bracket 23 of the optical image reader apparatuses 4 to the raised position, so as to place the relative optical assemblies 9 at the height of the wheels 102.

The lifting of the relative optical image acquisition assemblies 9 at the height of the wheels 102 allows the wheels 102 to be accurately scanned even when the plane PK is in the operative position, without therefore affecting the accuracy of the images acquired by the first image acquisition device 22.

In addition, the method described above preferably comprises the step of controlling the position of the support slide 23 based on the position of the movable plane PK, for example by placing the support slide 23 in the first position when the plane PK is in the lowered position and, vice versa, by placing the support slide 23 in the second position when the plane PK is in the raised position.

The method of calibration or alignment of the ADAS sensors 104 of the advanced driver assistance system or ADAS of the vehicle 100 that can be implemented by the vehicle service system 1 is known per se and can easily be derived from the description above, therefore it will not be further described.

The system 1 described above is advantageous in that it is capable of carrying out the calibration with a high precision and frequency, even when a vehicle 100 is standing in the control station 2.

In addition, the presence of the second optical image acquisition assembly 25, separate from the first one 22, optimizes the accuracy of acquisition of both the images of the sides of the vehicle 100 and of the target 12, because it optimizes the orientation of the relative optical axes relative to the target of each one of them.

Furthermore, the presence of the second optical image acquisition assembly 25, separate from the first one 22, reduces the size of the plate-shaped element 7 to a minimum and brings it as close as possible to the oblong housing 16, so as to maximize the space available in the service area 2.

In addition, the presence of the support slide 23 allows the image acquisition optical assembly 9 to be positioned in front of the relative wheel 102 even when the plane PK is in the raised position, with the obvious advantages that this entails. Indeed, this makes it possible to verify, with high precision and in real time, the correctness of the manual adjustments carried out by the operator, without the need to raise and lower the plane PK several times, because the optical image acquisition assembly 9 is placed in front of the relative wheel 102.

Finally, the presence of the second optical image acquisition assembly 25, separate from the first one 22 and with an optical axis approximately aligned with the longitudinal axis B, allows the target 12 to be accurately visualized both when the support slide 23 is in the lowered position and when it is in the raised position or in any intermediate position.

Finally, it is clear that the system and the method described above can be subjected to changes and variations, without for this reason going beyond the scope of protection of the present invention defined in the appended claims.

For example, the service system 1 could be equipped with only two apparatuses 8 placed on opposite sides of the vehicle 100 and of the axis A, approximately in the area of the centre of gravity of the vehicle 100.

In addition, according to a possible embodiment, the optical image acquisition assembly 9 could be devoid of the second image acquisition device 25 and the first image acquisition device 22 could be configured to acquire both images of the vehicle 100 and images of the target 12.

## Claims

1. Vehicle service system (1) for at least one vehicle (100) arranged in a vehicle-service area (2),
said vehicle service system (1) comprising at least two optical reader devices (8), which are arranged resting on a plane (F) in the service-vehicle area (2), on opposite sides of a first longitudinal axis (A) of said vehicle (100), so that they face opposite sides of said vehicle (100),
in which the optical reader apparatus (8) includes:
- an oblong housing (16) resting on said plane (F), which extends along a second longitudinal axis (B) transverse to said plane (F),
- a target (12), which is placed on said plane (F),
- an image acquisition optical assembly (9), which is configured to capture a first image of said vehicle (100) and to provide first data/signals encoding at least said first image and to capture a second image of said target (12) and to provide second data/signals encoding at least said second image, and
- a support slide (23), which is carried in a sliding manner by said oblong housing (16), supports said image acquisition optical assembly (9), and is movable along a second sliding direction (s2) parallel to said second axis (B) between a first position in which said support slide (23) is arranged at a first distance (d2) from the ground (F) and a second position in which said support slide (23) is arranged at a second distance (d3) from the ground (F),
in which said second distance (d3) is greater than said first distance (d2).

2. System according to claim 1, further comprising an electronic processing and control system (10), which is configured to process said first data/signals in such a way as to determine/construct one or more three-dimensional images relating to said vehicle (100) and/or parts of said vehicle (100),
said electronic processing and control system (10) being configured to calibrate said optical reader devices (8) based on second first data/signals.

3. System according to claim 2, in which said service-vehicle area (2) comprises a movable plane (PK), which is arranged resting on a plane (F), is adapted to carry said vehicle (100) and is movable along a first sliding direction (s1) transverse to said plane (F) between a lowered position, in which said movable plane (PK) is arranged adjacent to said plane (F) and a raised position, in which said movable plane (PK) is arranged spaced from said plane (F),
in the first position said support slide (23) is adapted to place said image acquisition optical assembly (9) at the height of the vehicle (100) temporarily resting on said moving plane (PK) when said moving plane (PK) is in the lowered position, and
in the second position said support slide (23) is adapted to place said image acquisition optical assembly (9) at the height of the vehicle (100) temporarily resting on said moving plane (PK) when said moving plane (PK) is in the raised position.

4. System according to claim 3, wherein said optical reader devices (8) further comprises an actuation mechanism adapted to move said support slide (23) along said oblong housing (16) between said first position and said second position.

5. System according to claim 4, in which said electronic processing and control system (10) is configured to drive said actuation mechanism in order to control the position of the support slide (23) based on the position of the moving plane (PK).

6. System according to any of the preceding claims, wherein said support slide (23) is coupled to a side of the oblong casing (9) facing said service-vehicle area (100), so as to face the vehicle (100) temporarily placed in the vehicle-service area (100).

7. System according to any of the preceding claims, wherein said optical reader apparatus (8) comprises:
a plate shaped element (14) that is fixed to the ground (F) and has an upper surface on which said target (12) is arranged,
said oblong housing (16) being adapted to be selectively and removably coupled to said plate shaped element (14).

8. System according to any of the preceding claims, wherein said image acquisition optical assembly (9) comprises a first optical image acquisition device (22) and a second optical image acquisition device (25), separate and distinct from said first optical image acquisition device (22),
said first optical image acquisition device (22) being placed on said optical reader apparatus (8) such that its field of view includes the vehicle (100) temporarily positioned on said vehicle-service area (100) and does not include said target (12),
said second optical image acquisition device (25) being placed on said optical reader apparatus (8) such that its field of view includes said target (12) and does not include the vehicle (100) temporarily positioned on said vehicle-service area (100).

9. System according to claim 8, in which said first optical image acquisition device (22) includes at least a first camera (22a).

10. System according to claim 9, in which said first optical image acquisition device (22) includes a second camera (22b) configured to cooperate with said first camera (22a) so as to define with it a binocular stereo vision system.

11. System according to claim 8, 9 or 10, wherein said second optical image acquisition device (25) includes a third camera (25a) configured to capture images of said target (12),
said target (12) being arranged immediately adjacent to said oblong envelope (16) and the optical axis of said third camera (25a) being approximately aligned with said second longitudinal axis (B).

12. System according to any one of claims 8 to 11, wherein said second optical imaging device (25) extends cantilevered from said oblong housing (16), so as to be arranged above said target (12).

13. System according to any one of claims 2 to 12, wherein said electronic processing and control system (10) is configured to process said first data/signals in such a manner as to construct one or more three-dimensional images relating to parts of the vehicle (100) corresponding to the wheels (102) of the vehicle (100), and process said images to determine geometric parameters characterizing said wheels (102) with respect to a predetermined reference system (SR).

14. System according to claim 13, wherein said electronic processing and control system (10) is configured to process said first data/signals in such a way as to construct one or more three-dimensional images relating to parts of the vehicle (100), and process said images to determine the position and/or orientation of said vehicle in said service-vehicle area (2) with respect to said predetermined reference system (SR).

15. System according to claim 14, wherein said electronic processing and control system (10) is configured to communicate to at least one ADAS calibration system (5), signals/data indicative of the position and/or orientation of said vehicle (100) in said service-vehicle area (2) with respect to the predetermined reference system (SR).

16. Method of operation of a system made according to any of the preceding claims,
the method including the steps of:
a) arranging at least two optical reader devices (8) in the service-vehicle area (2), on opposite sides of the longitudinal axis (A) of the vehicle (100), so that they face opposite sides of the vehicle (100),
b) elaborating said first data/signals in such a way as to determine/construct one or more three-dimensional images related to said vehicle (100) and/or parts of the vehicle (100),
c) arranging a target (12) on the ground (F) in a position immediately adjacent to the image acquisition optical unit (9) of the corresponding optical reader apparatus (8),
d) acquiring through the image acquisition optical unit (9) one or more images of the said adjacent target (12) so provide the second data/signals encoding the image of the target (12) itself,
e) calibrating said optical reader devices (4) based on said second data.

17. Method according to claim 16, further comprising the step of controlling the position of said support slide (23) based on the position of said vehicle (100) relative to said plane (F).
